# EUROPEAN PATENT SPECIFICATION

(11) **EP 3 579 369 B1**
(45) Date of publication and mention of the grant of the patent: **17.11.2021**
(21) Application number: 19178478.4
(22) Date of filing: 05.06.2019
(51) Int. Cl.: H02J 3/32, H02J 3/38, H02J 15/00, F03B 13/08

(54) **METHOD AND ARRANGEMENT FOR USING HYDROELECTRIC POWER AS A POWER RESERVE**
VERFAHREN UND ANORDNUNG ZUR VERWENDUNG VON HYDROELEKTRISCHEM STROM ALS EINE STROMRESERVE
PROCÉDÉ ET AGENCEMENT POUR L'UTILISATION D'ÉNERGIE HYDROÉLECTRIQUE EN TANT QUE RÉSERVE D'ÉNERGIE

(30) Priority: 06.06.2018 FI 20185518
(43) Date of publication of application: 11.12.2019
(73) Proprietor: UPM Energy Oy, 00100 Helsinki (FI)
(72) Inventor: Haromo, Juha, 42100 Jämsä (FI)
(74) Representative: Papula Oy

(56) References cited:
- EP-A2- 2 721 710
- DE-B3-102011 119 384
- SCHREIDER ACHIM ET AL: "An auspicious combination: Fast-ramping battery energy storage and high-capacity pumped hydro", ENERGY PROCEDIA, vol. 155, 15 March 2018 (2018-03-15), pages 156-164, XP085549560, ISSN: 1876-6102, DOI: 10.1016/J.EGYPRO.2018.11.059
- DE LADURANTAYE D ET AL: "Optimizing profits from hydroelectricity production", COMPUTERS AND OPERATIONS RESEARCH, OXFORD, GB, vol. 36, no. 2, 10 October 2007 (2007-10-10), pages 499-529, XP025465862, ISSN: 0305-0548, DOI: 10.1016/J.COR.2007.10.012 [retrieved on 2008-09-22]

## Description

### FIELD OF THE INVENTION

The invention concerns generally the use of power sources to maintain a steady and sufficient supply of electric energy to an electricity grid. In particular the invention concerns the optimized use of one or more battery banks together with one or more hydroelectric power plants as power reserves of the grid.

### BACKGROUND OF THE INVENTION

A high-voltage grid is the geographically distributed backbone of electricity transmission. Power stations supply the grid with electric energy, and at the consuming end are industrial companies, distribution network companies, and ultimately individual households. Losses in the grid sum up with the actual loads to form the total demand of electric power. All users should receive a sufficient amount of electric power at all times, and the AC frequency of the grid should remain as stable as possible. Simultaneously the use of energy sources should be optimized. It is important to maintain a balance between supply and demand in the grid.

The AC frequency of the grid constitutes a relatively reliable indicator of the balance between supply and demand, so that excessive demand lowers the frequency and vice versa. The operator responsible for the grid may decide how various levels of frequency variation will trigger the use of power reserves. For example in a grid the nominal AC frequency of which is 50 Hz, normal operation reserves may be used to maintain the frequency error below 0.2%, i.e. between 49.9 and 50.1 Hz. If the frequency decreases below 49.9 Hz and all normal operation reserves are in use already, disturbance reserves are taken into use.

Owners of installations with controllable power-generating capability may sell some of this capability to a grid operator for use as a power reserve. As the general rule, agile power reserves (i.e. ones that can react quickly and flexibly to variations in demand) are more valuable than ones that take a longer time to activate and that are slower to ramp up or down according to need. This rule in power reserve pricing may have significant economic consequences to the owners of such installations that involve inherent complicat-edness, or other reasons for inherent delays, in controlling the level of produced output power.

A prior art document EP 2 721 710 A2 describes some approaches for controlling power supplied to an electric grid. Receiving an indication of power to be supplied triggers generating power with a power generator and adjusting, using the generated power, an energy level of an energy storage device to control power supplied to the grid in accordance with the received indication.

A prior art document Schreider, A. et al: "An auspicious combination: Fast-ramping battery energy storage and high-capacity pumped hydro" in 12th International Renewable Energy Storage Conference, 13-15 March 2018, describes several ways in which a pumped-storage hydro power plant and a battery energy storage system may work together.

A prior art document DE 10 2011 119 384 B3 describes a hydroelectric power plant which comprises at least one turbine and a generator, to which are coupled a plurality of flywheel storages. Methods for controlling the hydroelectric power plant are also described.

A prior art document De Ladurantaye et al: "Optimizing profits from hydroelectricity production" in Computers and Operations research, 36(2), 499-529, 10 October 2007 describes a deterministic and stochastic mathematical model for maximizing the profits obtained by selling electricity produced through a cascade of dams and reservoirs in a deregulated market.

### SUMMARY

It is an objective of the invention to present a method and arrangement for using hydroelectric power as a power reserve of an electricity grid in a flexible and effective manner. A particular objective of the invention is that a plurality of hydroelectric power generators could be made to respond to detected changes in demand within a short time. A further objective of the invention is that the method and arrangement of the kind described above can be combined with drainage basin optimization in which the available water flows of a drainage basin are used as efficiently as possible within a framework of boundary conditions.

The objectives of the invention are achieved by combining the rapid use of an electric energy storage to somewhat slower changes made in the total output power level of a plurality of commonly controlled hydroelectric power generators.

A method according to the invention is characterized by the features recited in the characterizing part of the independent claim directed to a method.

An arrangement according to the invention is characterized by the features recited in the characterizing part of the independent claim directed to an arrangement.

A computer program according to the invention comprises one or more sets of one or more machine-executable instructions that, when executed by one or more processors, are configured to cause the performing of a method of the kind described above. The computer program may be embodied on a volatile or a nonvolatile computer-readable record medium, for example as a computer program product comprising at least one computer readable non-transitory medium having program code stored thereon.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a plurality of hydroelectric power generators in power plants along a river,
**Figure 2** illustrates an arrangement according to an embodiment,
**Figure 3** illustrates a method according to an embodiment,
**Figure 4** illustrates changes in power in a first example case,
**Figure 5** illustrates changes in power in a second example case, and
**Figure 6** illustrates changes in power in a third example case.

### DETAILED DESCRIPTION

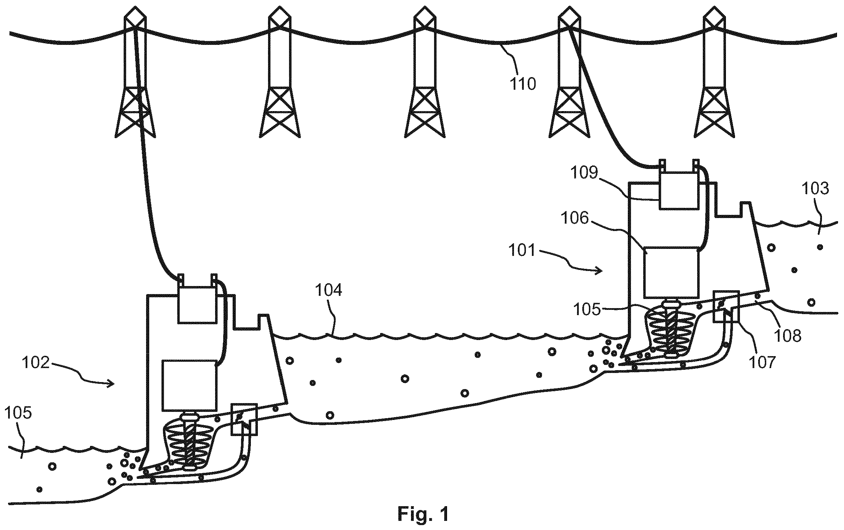

Fig. 1 illustrates schematically a first hydroelectric power plant 101 and a second hydroelectric power plant 102 that are located within a common drainage basin. Consequently their hydroelectric power generators draw their operating powers from water flows of the common drainage basin. Fig. 1 illustrates a simplified case in which the first 101 and second 102 hydroelectric power plants are located in succession along a single river with no tributaries, so that the upper waters 103, middle waters 104, and lower waters 105 are actually the same water flowing through the system. In a real life drainage basin the water circulation is much more complicated, including tributaries; rainfall; evaporation; agricultural, industrial and municipal use; and other factors. The power plants in question may be located at different parts of the drainage basin, so that the aspects of water circulation affect them differently. This simplified model is sufficient for the following explanation of some basic concepts.

A hydroelectric power generator comprises a turbine 105, an associated generator 106, and an arrangement of controllable gates 107 and channels 108 that affect the flow of water through the turbine 105. A controllable coupling 109 couples the generator 106 to an electricity grid 110. One hydroelectric power plant may comprise a plurality of individually controllable hydroelectric power generators. The way in which the hydroelectric power generators supply electric energy to the grid 110 is based on an agreement between the operator of the hydroelectric power plant and the operator of the electricity grid.

In many cases a plurality of hydroelectric power plants within a common drainage basin, like the first 101 and second 102 hydroelectric power plants in fig. 1, are run by a common operator. Typically, especially in large drainage basins, a single operator has control over only some of the water flows within the drainage basin: for example, the operator may run a couple of hydroelectric power plants along a main river or river branch of the drainage basin. However, in order to maintain generality, the concept of being located within a common drainage basin is used here to cover all cases where at least some of the same water flows between two or more hydroelectric power generators for which a common operator (or a group of cooperating operators) is responsible.

An efficiency aim of the operator may be to maximize the amount of electric energy obtainable from hydroelectric power plants within the drainage basin. Commercially the operator may aim to maximize the total obtainable price of electric energy produced by hydroelectric power plants within the drainage basin. Certain natural factors affect these possibilities. For example, the more it rains within the upper parts of the drainage basin, the more water is available for running through the turbines and turning the generators. There are also regulatory boundary conditions, like the upper and lower limits between which the water surface level is allowed to vary in various parts of the drainage basin, and the commitments that the operator of the hydroelectric power plants has made with the operator of the electricity grid. Technical features of the individual hydroelectric power generators constitute another set of boundary conditions within which the operator must try to achieve said aims.

Good understanding of the circulation of water within the drainage basin is needed, because the amounts of water in various parts of the drainage basin are interlinked. For example if the gates 107 of the first hydroelectric power plant 101 are opened more, the surface level of the upper waters 103 goes down and the surface level of the middle waters 104 begins to rise, eventually leading to a corresponding rise also in the surface level of the lower waters 105.

Drainage system optimization algorithms have been developed that take into account the natural, regulatory, and technical boundary conditions and water flow models within a drainage basin. An optimization algorithm of this kind typically tackles a multidimensional numerical optimization problem and looks for obtaining a maximum of a value function (or a minimum of a penalty function). It may take measurement data from various parts of the system as initial values and experiment with parameter values that represent possible actions of the operator. Those actions that seem to maximize the value function are performed, and the calculations are constantly repeated so that any changes in the initial values and/or boundary conditions can be taken dynamically into account.

The AC frequency of the electricity grid 110 is an important indicator of the balance between supply and demand of electric energy. When exactly as much electric energy is supplied to the grid as the various consumers demand, the AC frequency is at a nominal value like 50 Hz or 60 Hz. Increasing demand tends to lower the AC frequency, while a momentary surplus of supply tends to increase it. In practice the operator of the electricity grid 110 has set a default frequency range within which the AC frequency may vary. Deviations from the default frequency range necessitate the activation of reserves. A frequency drop of certain magnitude must be met by activating more production capacity and/or by lowering the consumption of certain large, controllable loads. Correspondingly if the AC frequency of the grid rises above the default frequency range, some production capacity must be decoupled and/or the consumption of energy in controllable loads must be increased.

The owner of a power reserve may receive significant monetary advantage from the operator of the electricity grid by committing to maintaining a certain amount of power reserve and to putting it into use as agreed at the occurrence of a frequency deviation. Some changes in the AC frequency of the electricity grid 110 may come suddenly and unexpectedly, for example when a major power plant must be suddenly closed down or decoupled from the electricity grid due to unexpected technical problems. Power reserves are the more valuable, the faster they can react to such sudden and unexpected changes. Fastest changes that may come into consideration should take place essentially immediately, or within seconds at the most.

Hydroelectric power has not been considered a viable choice for use as a fast-reacting power reserve because of the natural tardiness in controlling the amount of produced power. If a drop is observed in the AC frequency of an electricity grid and a command is consequently given to a hydroelectric power generator to increase power, what physically happens is that one or more gates are opened more, in order to make more water flow through the turbine. The gates are heavy structures the moving of which takes some time. Also it takes some time for the "additional" water to accelerate into the required flow speed, and it takes time for the rotating mass in the turbine and generator to acquire the new rotating speed.

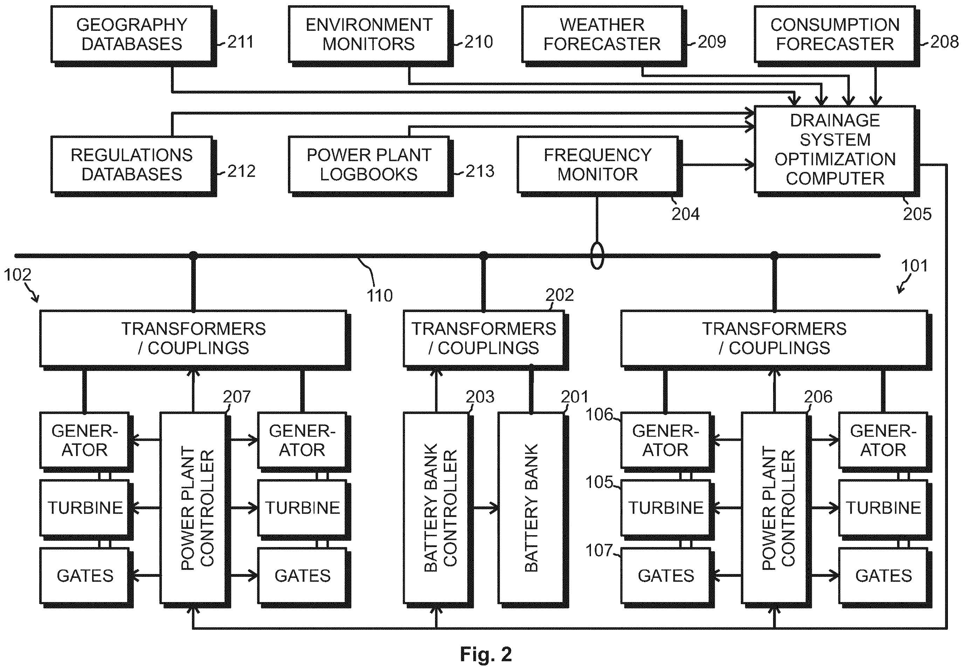

Fig. 2 illustrates an arrangement with which hydroelectric power can be used as a power reserve of an electricity grid. The arrangement of fig. 2 comprises a plurality of hydroelectric power generators coupled to supply electric energy to an electricity grid 110. In this example the hydroelectric power generators are located in two separate hydroelectric power plants 101 and 102. An example of a hydroelectric power generator is the hydroelectric power generator of the first hydroelectric power plant 101, comprising a turbine 105, an associated generator 106, and gates 107 for affecting the flow of water through the turbine 105.

As a difference to the system of fig. 1 the arrangement of fig. 2 comprises an electric energy storage, which can be called a battery bank 201 for short. This short designation is used here for convenience, but it does not limit the actual technical implementation of the electric energy storage. In addition to what is strictly understood as batteries, the technology of the electric energy storage may involve elements of e.g. capacitors of various kinds, including but not being limited to supercapacitors.

The arrangement comprises also a controllable coupling 202 between the battery bank 201 and the electricity grid 110. The controllable coupling 202 may be a bidirectional coupling, so that it can be made to allow electric energy to flow in both directions between the battery bank 201 and the electricity grid 110. The controllable coupling 202 may comprise controllable switching components, as well as components needed to match the battery bank 201 and the electricity grid 110 electrically to each other. For example if the battery bank 201 is a DC device, the controllable coupling 202 may comprise an inverter for converting DC power taken from the battery bank 201 to AC power before feeding it into the electricity grid 110. The controllable coupling 202 may comprise a rectifier for converting AC power taken from the electricity grid 110 to DC power before feeding it into the battery bank 202.

A battery bank controller 203 is shown separately in fig. 2, configured to control the battery bank 201 as well as the controllable coupling 202 between the battery bank 201 and the electricity grid 110. The controller functionality may also be partly or wholly integral with the battery bank 201 and/or the controllable coupling 202.

The arrangement of fig. 2 comprises a frequency monitor 204 that is configured to monitor an AC frequency of the electricity grid 110. A control system 205 is coupled to receive detection information from the frequency monitor 204 and configured to control, through the respective power plant controllers 206 and 207, a total output power level at which the hydroelectric power generators supply electric power to the electric grid 110. The control system 205 is also configured to control, through the battery bank controller 203, the controllable coupling 202 between the battery bank 201 and the electricity grid 110.

The concept of a frequency monitor can be considered more generally, so that the actual device that physically monitors the AC frequency of the electricity grid 110 does not need to be an explicit part of the arrangement. Rather, the act of physically monitoring the AC frequency of the electricity grid 110 may take place somewhere else, at the responsibility of someone else, who then delivers the results of such monitoring in real time or essentially real time to those parties that have committed to maintaining power reserves. In such a case the frequency monitor 204 in the arrangement of fig. 2 can be considered to be the responding device that is responsible for receiving the results of actual frequency monitoring from a device that physically monitors the frequency somewhere else.

The control system 205 is configured to take into account a number of other aspects than just the AC frequency of the electricity grid 110 in making the controlling decisions. As examples, fig. 2 shows a consumption forecaster 208, a weather forecaster 209, various environment monitors 210, geography databases 211, regulations databases 212, and power plant logbooks 213. Of these, the consumption forecaster 209 is configured to follow the consumption of electric energy from the electric grid 110 and to predict, how the consumption of electric energy will develop in the near future. The weather forecaster 209 is configured to follow developments in weather to predict, how weather conditions such as rainfall will affect the possibilities of producing electric energy in the hydroelectric power generators.

Environment monitors 210 may comprise various monitors such as water level sensors, wind sensors, temperature sensors, and others. They may provide the control system 205 with up-to-date initial values indicative of environmental parameters within the drainage basin. The control system 205 may store various time series of readings that have been obtained from the environment monitors 210, so that is has history data from which it can make analyses of how environmental conditions have developed.

The geography databases 211 contain information about the geography of the drainage basin, which is useful in simulating the future developments in environmental conditions as well as simulating the effects of the way in which water will flow through the various hydroelectric power plants within the drainage basin. The geography databases 211 may contain also time series of observed water flows within various parts of the drainage basin.

Regulations databases 212 contain information about the regulatory boundary conditions that must not be compromised. Other information that may be included in the regulations databases 212 are for example time series of energy prices, history data about the pricing of power reserves, and the like. "Soft" regulatory limits can be included, like recommendations about how recreational use of the lakes and rivers should be taken into account, and/or how water levels and water flows affect the nature within the drainage basin.

Power plant logbooks 213 provide the control system 205 with technical boundary conditions, including but not being limited to factors such as capacity, efficiency profiles, availability, and maintenance schedules of the various hydroelectric power generators that the control system 205 may control.

The possibility of using the arrangement of fig. 2 as a fast power reserve of the electricity grid 110 is based on the fact that the controllable coupling 202 can be activated essentially instantaneously to make electric energy flow between the battery bank 201 and the electricity grid 110. We may first consider a situation in which the control system 205 receives from the frequency monitor 204 detection information indicative of a frequency drop, i.e. a deviation of the AC frequency of the electricity grid 110 from the default frequency range in the decreasing direction. Such a frequency drop means that more electric energy is momentarily consumed than produced. The control system 205 may command, through the battery bank controller 203, the battery bank 201 to feed additional electric energy to the electric grid 110. Particularly if solid-state (i.e. semiconductor) technology is used in the controllable coupling 202, changing the way in which electric energy flows between the battery bank 201 and the electricity grid 110 does not involve any moving parts and can be accomplished through giving appropriate values for the required electronic control signals.

While the battery bank 201 is employed as the rapidly switched power reserve, the control system 205 may initiate a change in the total output power of the plurality of hydroelectric power generators it has at its disposal. Again assuming for the time being that the detected deviation of the AC frequency of the grid was a frequency drop, the control system 205 may initiate a change from a first total output power level to a second, higher output power level. Above it was explained how such a change cannot take place instantaneously in hydroelectric power generation but involves certain inevitable physical facts that make it take some time. The control system 205 is configured to continue to make electric energy flow between the battery bank 201 and the electricity grid for the duration of time it takes for the total output power of said plurality of hydroelectric power generators to reach said second total output power level. The rate at which the total output power level can be made to change may be in the order of a megawatt per minute or somewhat more or less. It can be for example about 0.8 megawatts per minute.

Based on its prior knowledge about the technical characteristics of the hydroelectric power generators the control system 205 may know, how much time it takes to execute the desired change in total output power and what kind of a profile the change will follow. Additionally or alternatively the control system 205 may receive feedback measurements from the power plant controllers 206 and 207, the feedback being dynamically indicative of the momentary output power of each hydroelectric power generator. The control system 205 may dynamically control the power at which electric energy flows between the battery bank 201 and the electricity grid, at each moment to correspond to a remaining difference between a momentary output power of the plurality of hydroelectric power generators and the second total output power level. This way the sum of the electric power taken from the battery bank and the electric power produced by the plurality of hydroelectric power generators remains constant.

Above it was assumed that the detected deviation of the AC frequency of the electricity grid 110 was a frequency drop, so consequently more power had to be fed into the electricity grid 110. The same principle can be applied, though, if the detected deviation of the AC frequency of the electricity grid 110 was a frequency overshoot, indicating a need to feed less power to the electricity grid 110. As a difference to the procedure explained above, the step of making electric energy flow between an electric energy storage (the battery bank 201) and the electricity grid 110 now involves using electric energy drawn from the electricity grid 110 to charge the battery bank 201. Correspondingly the step of initiating a change in the total output power of the plurality of hydroelectric power generators means a change from a first total output power level to a second, lower total output power level.

The step of detecting a deviation from a default frequency range may be given some further consideration. The most straightforward case is one where the detecting of a deviation comprises detecting an actual, occurred deviation, in which a measured AC frequency of the electricity grid 110 is out of its default frequency range. Additionally or alternatively the principle of predictive detecting can be applied. Said detecting of a deviation may comprise detecting a so-called imminent deviation, in which a measured AC frequency of said electricity grid exhibits a trend that, if continued, leads to said measured AC frequency of said electricity grid going out of said default frequency range.

Earlier in this text it was pointed out that in a case where said plurality of hydroelectric power generators draw their operating power from water flows of a common drainage basin, it is advantageous to apply a drainage system optimization algorithm when decisions are made about the respective output power levels of the hydroelectric power generators and about the changes to be made in them. An advantageous place where such a drainage system optimization algorithm may be executed in the system architecture of fig. 2 is the control system 205; it is for this reason the control system 205 is labeled a drainage system optimization computer in fig. 2. The drainage system optimization algorithm may aim at optimizing an amount of electric energy obtainable from hydroelectric power plants within said drainage basin. Additionally or alternatively the drainage system optimization algorithm may aim at optimizing factors like: a total obtainable price of electric energy produced by hydroelectric power plants within said drainage basin; a total efficiency of the hydroelectric power generators; minimal need of mechanical movements of gates; reactions to icing and other causes of screen losses; distribution in time of produced electric energy, for example in terms of the period of production plans; and so on.

The desired output power level of the plurality of hydroelectric power generators is a quite decisive aim for the control system 205 to achieve and maintain. In an optimization algorithm this can be achieved for example by penalizing heavily any deviation between the actual and desired total output power levels, so that when the optimization algorithm tries to find a maximum of the value function it would prefer making decisions that bring the actual total output power level very close to the desired total output power level. Cases may occur, however, where from the optimization viewpoint it is even more desirable to achieve some other aim, at the cost of not reaching the desired total output power level. Thus even if at least one of the first and second total output power levels mentioned above may be selected on the basis of executing the drainage system optimization algorithm, running the plurality of hydroelectric power generators at the corresponding total output power level is not a mandatory requirement.

When electric energy flows between the battery bank 201 and the electricity grid 110 (either for supplying additional power from the battery bank to the grid, or for draining excess power from the grid to charge the battery bank) for a certain period of time, the result is a change in the state of charge of the battery bank 201. In order to make the battery bank 201 properly prepared for the next possible need it is advisable to maintain it in a predetermined default state of charge. This means that after said change in the state of charge it is advisable to perform a corresponding reverse action during a subsequent period of time, so that in the end the state of charge of the battery bank 201 returns to what it was before said flowing of electric energy was initiated.

This so-called default state of charge can be selected on the basis of certain assumptions about what the battery bank 201 will be mostly used for. If the probabilities of frequency drops and frequency overshoots in the electricity grid 110 are equal, and if an equal absolute amount of electric energy should assumedly flow between the battery bank 201 and the electricity grid 110 in each case, the default state of charge may be 50% of the effective capacity of the battery bank 201. Other selections are possible. For example, one half of the effective capacity might be reserved for use as a disturbance reserve, which will only be used to counteract frequency drops that are larger than a predetermined limit set by the operator of the electric grid. The other half of the effective capacity of the battery bank could be reserved for use as a normal operating reserve, which will be used to counteract both smaller frequency drops and frequency overshoots. In this case the default state of charge may be 75% of the effective capacity of the battery bank 201.

When the total output power level of the plurality of hydroelectric power generators is changed, in order to restore the battery bank to its default state of charge, the invention is configured to first "exaggerate" the change slightly, and only thereafter bring the total output power level to the actual desired value. In other words, after the total output power of the plurality of hydroelectric power generators has first reached the second total output power level at a first moment of time, said total output power of said plurality of hydroelectric power generators is made to continue changing in the same direction. This continuing change lasts until a second, later moment of time. After that the total output power of the plurality of hydroelectric power generators is made to return to said second total output power level at a third, even later moment of time. Between said first and third moments of time the battery bank is recharged if it was discharging before said first moment of time, or discharged if it was charging before said first moment of time.

Above it was already pointed out that the battery bank 201 and its associated controllable coupling 202 may react extremely fast to a detected deviation from the default frequency range. Together with the fact that the battery bank 201 may be capable of temporarily meeting the occurred need of supplying more power or draining excess power all by itself, this can be used so that shortest deviations from the default frequency range are counteracted with the battery bank only, without making any changes to the total output power level of the plurality of hydroelectric power generators. In order to determine, whether the total output power level of the plurality of hydroelectric power generators needs to be changed, the control system 205 may first make electric energy flow between the electric grid 110 and the battery bank 201 and then wait for a short duration of time to see, whether the AC frequency of the grid will recover sufficiently.

In other words, after the deviation from the default frequency has been detected, the method explained here may comprise continuing to monitor the AC frequency of the electricity grid 110 to detect, whether the deviation from the default frequency persists. The change in the total output power of the plurality of hydroelectric power generators from a first total output power level to a second total output power level is then initiated only if said deviation from said default frequency range is found to persist.

Here it must be noted that making electric energy flow between an electric energy storage (the battery bank 201) and the electricity grid will typically make the AC frequency of the grid recover somewhat as such, because this is the mere purpose of using the electric energy storage. This means that a persisting deviation from said default frequency range is one in which the monitored AC frequency of the grid does not return back into the default frequency range with a sufficient margin indicating that the flow of electric energy between the electric energy storage and the grid can discontinued without thereby causing a new deviation.

If the initial deviation from the default frequency range is found not to persist, the method may comprise executing an energy storage restoration process in order to bring the battery bank back into its default state of charge. The electric energy storage restoration process may comprise reciprocal changes in the total output power of the plurality of hydroelectric power generators and the power at which electric energy flows between the electric energy storage and the electricity grid, until a target charge level of said electric energy storage has been reached. As an example, we may assume that a frequency drop was first detected and the battery bank 201 was consequently made to feed electric energy into the grid 110. The frequency drop was found not to persist, so the total output power level would not need to be changed to meet any additional demand of power. However, for a certain period of time the total output power level is increased anyway, in order to generate the amount of electric energy that is needed to replenish the battery bank 201 and bring it back to its default state of charge.

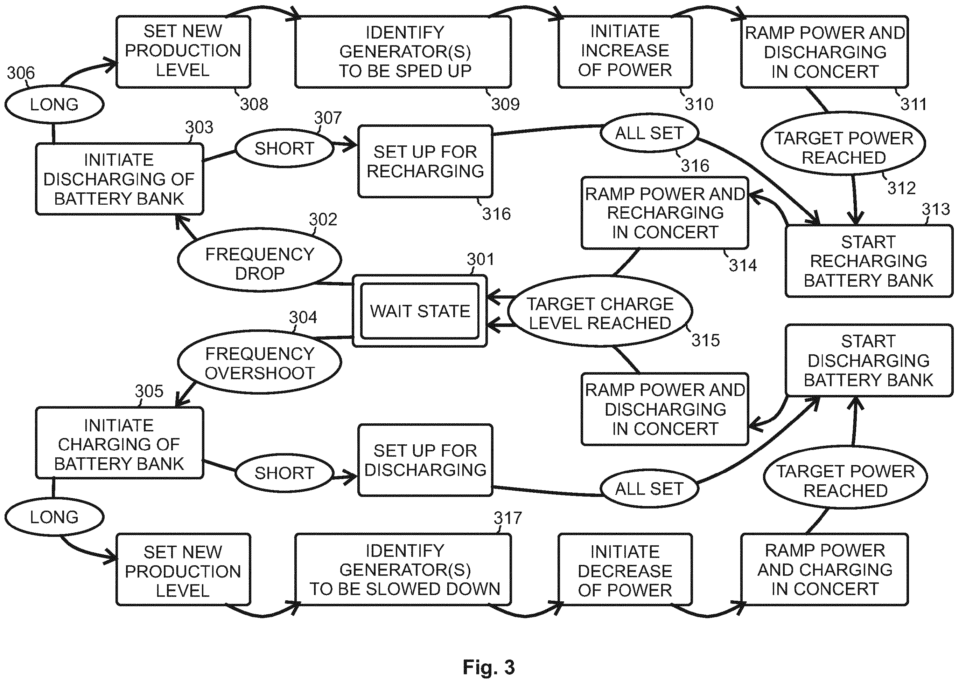

Fig. 3 illustrates an embodiment of a method in the form of a state diagram. In the wait state 301 each of the plurality of hydroelectric power generators is run at its respective output power level to supply electric energy at a total output power to the electricity grid. The wait state 301 comprises also monitoring the AC frequency of the electricity grid to detect deviations from a default frequency range.

As a response to detecting a deviation from said default frequency range, electric energy is made to flow between an electric energy storage and said electricity grid. As a first example we may assume that the deviation was a frequency drop 302, so a process of discharging electric energy from the battery bank to the electricity grid is initiated as illustrated by state 303. Had a frequency overshoot 304 been detected, the corresponding change of state would have led to state 305, in which a process was initiated to charge the battery bank with electric energy drawn from the electricity grid.

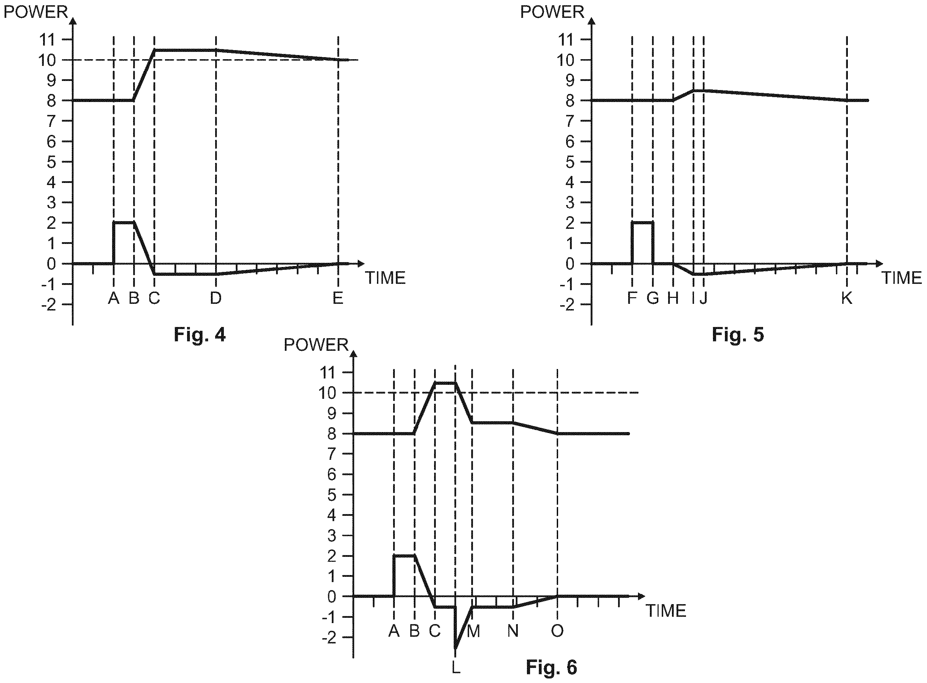

Figs. 4 and 5 illustrate power levels in two alternative cases that both refer to a detected frequency drop. Here, as well as in fig. 3, it is assumed that after making electric energy flow between the electric energy storage, the control system will wait for a while to examine whether the deviation persists before making a decision to change a total output power level of the plurality of hydroelectric power generators. Fig. 4 concerns a case in which the deviation was found to persist ("long" deviation 306 in fig. 3), while fig. 5 concerns a case in which the deviation was found not to persist ("short" deviation 307 in fig. 3). Both in fig. 4 and in fig. 5 the upper curve represents the total output power of the plurality of hydroelectric power generators, and the lower curve represents the power at which electric energy flows between the electric energy storage and the electricity grid. The units are arbitrary and only used for illustrative purposes.

Moment A in fig. 4 is the moment at which the frequency drop is detected. Between moments A and B the battery bank feeds power into the electric grid at the power of +2 units while the control system continues to monitor the AC frequency of the electricity grid to detect, whether the frequency drop persists. This happens to be the case, so following the condition "long" 306 in fig. 3 the control system proceeds to set a new total power output level at state 308 and to identify at state 309 that hydroelectric power generator (or those hydroelectric power generators) that will be used to generate the required additional electric power.

At moment B the control system initiates a change in the total output power of said plurality of hydroelectric power generators from a first total output power level of 8 units to a second total output power level of 10 units: the upper curve in fig. 4 turns upwards. Initiating the increase in total output power corresponds to state 310 in fig. 3. Simultaneously the control system begins to reduce the power at which electric energy is fed from the battery bank to the electricity grid: the lower curve in fig. 4 turns downwards.

Changing the two powers in concert, as illustrated with state 311 in fig. 3, means that between moments B and C in fig. 4 the sum of electric powers fed into the electricity grid from the plurality of hydroelectric power generators on one hand and the battery bank on the other hand remains constant. In other words, the power at which electric energy flows between said electric energy storage and said electricity grid is dynamically controlled to correspond to a remaining difference between a momentary output power of said plurality of hydroelectric power generators and said second total output power level.

Shortly before moment C in fig. 4 the target total output power level of the plurality of hydroelectric power generators is reached (see condition 312 in fig. 3). The battery bank needs to be restored into its default state of charge, for which reason the total output power of the plurality of hydroelectric power generators is made to continue changing in the same direction until a second, later moment of time. This is moment C in fig. 4. The lower curve going below the X-axis in fig. 4 means that the battery bank begins to recharge, as illustrated with state 313 in fig. 3.

At moment C the changes in total output power of the plurality of hydroelectric power generators are stopped, so that the total output power is slightly above the eventually desired "second" output power level of 10 units. Said total output power of said plurality of hydroelectric power generators is eventually returned to said second total output power level at a third, even later moment of time, which is moment E in fig. 4. Between moments C and E, the battery bank is recharged because it had been discharging before moment C. In other words the excess electric energy produced by the plurality of hydroelectric power generators is conducted into the battery bank according to some selected battery recharging strategy. If the originally detected deviation had been a frequency overshoot, restoring the battery bank into its default state of charge would involve discharging it, because in that case it had been charging before said first moment of time.

In fig. 4 it is assumed that the power at which the battery bank is recharged is significantly lower than the power at which it was discharged, but this is only an illustrative example, and the selected recharging power level can be selected on the basis of appropriate knowledge of the electric characteristics of the battery bank (or, more generally: the electric energy storage). In order to maintain the net power available for others in the electricity grid constant, it is advisable to make reciprocal changes in the total output power of the plurality of hydroelectric power generators and the power at which electric energy flows between said electric energy storage and said electricity grid until a target charge level of said electric energy storage has been reached. These reciprocal changes are seen in fig. 4 as the symmetric form of the two curves through moments C, D, and E. In fig. 3 they constitute a part of state 314. Reaching the default or target charge level of the battery bank as in condition 315 of fig. 3 causes a transition back to the wait state 301.

Fig. 5 illustrates changes in power when the deviation (which is detected at moment F in fig. 5) is found not to persist. In fig. 3 this is the condition "short" 307. At moment G the control system finds that the AC frequency of the network is safely within the default frequency range again, so no changes in the total output power of the plurality of hydroelectric power generations are needed, and the battery bank can be decoupled from the electricity grid. However, the electric energy that was taken from the battery bank between moments F and G should be replenished. Therefore the control system makes plans for an energy storage restoration process, as illustrated by state 316 in fig. 3. Since there are now no particular needs to react fast, the planned energy storage restoration process can begin at any suitable moment in the near future, and it may follow a profile that comprises only very smooth changes in power, if necessary.

When everything is ready for executing the planned energy storage restoration process, as illustrated by condition 317 in fig. 3, a transition to state 313 occurs. The total output power of the plurality of hydroelectric power generators is temporarily increased, beginning at moment H in fig. 5. Moments I and J illustrate examples of moments at which the power profiles associated with the planned energy storage restoration process may change. At moment K the battery bank has been restored to its default state of charge. The energy storage restoration process comprises reciprocal changes in said total output power and the power at which electric energy flows between said electric energy storage and said electricity grid until moment K, as can again be seen from the symmetricity of the upper and lower curves in fig. 5.

The lower part of the state diagram in fig. 3 is essentially a mirror image of the upper part, with all frequency- and power-related terms inverted. Thus, for example, while state 309 comprised identifying that hydroelectric power generator or those hydroelectric power generators that were to be sped up, the corresponding mirror image state 317 comprises identifying that hydroelectric power generator or those hydroelectric power generators that are to be slowed down.

It may happen that all steps that are related to one detected deviation from the default frequency range have not yet been completed when another deviation from the default frequency range is detected. In such a case the reaction to the subsequent deviation from the default frequency range must combine features of corrective action taken as a response to the subsequent deviation with features that still remain from the previous deviation.

Fig. 6 is an example of such a combination. What happens at moments A, B, and C is the same as in fig. 4: a frequency drop is detected at moment A, the deviation is found to persist at moment B, and the initial change in the total output power of the plurality of hydroelectric power generators is completed at moment C. However, at moment L a large frequency overshoot is suddenly detected, necessitating immediate action to cut the amount of electric power fed into the electricity grid.

A decision is made to bring the total output power of the plurality of hydroelectric power generators back to 8 units as quickly as the physical constraints of the hydroelectric power plants allow. Simultaneously the power at which the battery bank is recharged is increased so that the net power fed into the electricity grid is 8 units already. The power at which electric energy flows from the electricity grid to the battery bank is dynamically controlled to correspond to a remaining difference between a momentary output power of said plurality of hydroelectric power generators and the 8 units total output power level, until at moment M it is noticed that some additional recharging of the battery bank must still be done in order to replenish all energy that was taken between moments A and C. Therefore both curves level out between moments M and N, and ramp to their final values in concert between moments N and O.

Several advantages can be gained through application of embodiments of the invention. For example, mechanical movements of gates in hydroelectric power plants may be optimized, both so that unnecessary back-and-forth changes are minimized and so that the rate at which mechanical movements are executed can be chosen optimally. More time can be given for the decision-making algorithm to decide about which hydroelectric power generators should take part in each change of the total output power, which may lead to making more educated decisions with more advantageous results. Changes in total output power can be distributed more appropriately among the hydroelectric power plants at various locations within the drainage basin, which helps to balance the changes in water levels and to avoid unwanted "flood waves" that could propagate through the drainage system in a less optimal case. Optimal decision-making may help to maintain more water in store at the upper parts of the drainage system, where it is more valuable because it has the capacity of producing electric energy in all hydroelectric power plants below.

It is obvious to a person skilled in the art that with the advancement of technology, the basic idea of the invention may be implemented in various ways. The invention and its embodiments are thus not limited to the examples described above, instead they may vary within the scope of the claims. As an example, although advantageous it is not necessary to dynamically control the power at which electric energy flows between said electric energy storage and said electricity grid to correspond to a remaining difference between a momentary output power of said plurality of hydroelectric power generators and said second total output power level. It is possible to e.g. allow the battery bank to inject electric energy into the electricity grid at full power all the way until the plurality of hydroelectric power generators has reached its new, desired, "second" total output power level. In such a control strategy the net effect on the power produced (and, correspondingly, the net correcting effect on the AC frequency of the electricity grid) is first somewhat exaggerated, but this is not a big problem as long as the net effect is not as large as to cause a frequency deviation in the opposite direction.

## Claims

1. A method for using hydroelectric power as a power reserve of an electricity grid (110), comprising:
- running a plurality of hydroelectric power generators (106), each at a respective output power level, to supply electric energy at a total output power to said electricity grid (110),
- monitoring (204) an AC frequency of said electricity grid (110) to detect deviations (302, 304) from a default frequency range,
- as a response to detecting a deviation (302, 304) from said default frequency range, making electric energy flow (303, 305) between an electric energy storage (201) and said electricity grid (110),
- initiating a change (310) in said total output power of said plurality of hydroelectric power generators from a first total output power level to a second total output power level, and
- continuing (311) to make electric energy flow between said electric energy storage (201) and said electricity grid (110) for the duration of time it takes for the total output power of said plurality of hydroelectric power generators to reach (312) said second total output power level;
**characterized in that**:
- said plurality of hydroelectric power generators (106) draw their operating power from water flows of a common drainage basin while being located at different parts of said drainage basin,
- at least one of said first and second total output power levels is selected (308) on the basis of executing a drainage system optimization algorithm that optimizes at least one of: amount of electric energy obtainable from hydroelectric power plants within said drainage basin; a total obtainable price of electric energy produced by hydroelectric power plants within said drainage basin; a total efficiency of the hydroelectric power generators; minimal need of mechanical movements of gates; reactions to icing and other causes of screen losses; distribution in time of produced electric energy,
- after the total output power of said plurality of hydroelectric power generators (106) has reached (312) said second total output power level at a first moment of time, the method comprises making said total output power of said plurality of hydroelectric power generators continue changing (313) in the same direction until a second, later moment of time,
- the method comprises returning (314) said total output power of said plurality of hydroelectric power generators to said second total output power level at a third, even later moment of time, and
- between said first and third moments of time, the method comprises recharging said electric energy storage if it was discharging before said first moment of time, or discharging said electric energy storage if it was charging before said first moment of time.

2. A method according to claim 1, comprising:
- dynamically controlling (311) the power at which electric energy flows between said electric energy storage (201) and said electricity grid (110) to correspond to a remaining difference between a momentary output power of said plurality of hydroelectric power generators and said second total output power level.

3. A method according to claim 1 or 2,
wherein said detecting of a deviation (302, 304) comprises detecting an occurred deviation, in which a measured AC frequency of said electricity grid (110) is out of said default frequency range.

4. A method according to any of the preceding claims, wherein said detecting of a deviation (302, 304) comprises detecting an imminent deviation, in which a measured AC frequency of said electricity grid (110) exhibits a trend that, if continued, leads to said measured AC frequency of said electricity grid (110) going out of said default frequency range.

5. A method according to claim 1, wherein said change in said total output power of said plurality of hydroelectric power generators (106) from said first total output power level to said second total output power level is made through a sequence of changes in generator-specific output powers of at least two of said plurality of hydroelectric power generators, wherein said sequence of changes is determined on the basis of executing said drainage system optimization algorithm

6. A method according to any of the preceding claims, comprising:
- after said deviation (302, 304) from said default frequency range has been detected, continuing to monitor said AC frequency of said electricity grid to detect, whether said deviation from said default frequency persists,
- initiating said change (310) in said total output power of said plurality of hydroelectric power generators from a first total output power level to a second total output power level only if said deviation from said default frequency range is found to persist (306) .

7. A method according to claim 6, comprising:
- if said deviation from said default frequency range is found not to persist (307), executing an electric energy storage restoration process that comprises reciprocal changes (313, 314) in said total output power and the power at which electric energy flows between said electric energy storage (201) and said electricity grid (110) until a target charge level of said electric energy storage (201) has been reached (315).

8. An arrangement for using hydroelectric power as a power reserve of an electricity grid (110), comprising:
- an electric energy storage (201),
- a controllable coupling (202) between said electric energy storage (201) and said electricity grid (110),
- a plurality of hydroelectric power generators (106) coupled to supply electric energy to said electricity grid (110),
- a frequency monitor (204) configured to monitor an AC frequency of said electricity grid (110), and
- a control system (205) coupled to receive detection information from said frequency monitor (204) and configured (203) to control said controllable coupling (202) and a total output power level of said plurality of hydroelectric power generators (106);
wherein said control system (205) is configured to respond to detection information indicative of a deviation (302, 304) of said AC frequency from a default frequency range by:
- making electric energy flow (303, 305) between said electric energy storage (201) and said electricity grid (110),
- initiating a change (310) in said total output power of said plurality of hydroelectric power generators from a first total output power level to a second total output power level, and
- continuing (311) to make electric energy flow between said electric energy storage (201) and said electricity grid (110) for the duration of time it takes for the total output power of said plurality of hydroelectric power generators to reach (312) said second total output power level;
**characterized in that**:
- said plurality of hydroelectric power generators (106) draw their operating power from water flows of a common drainage basin while being located at different parts of said drainage basin,
- said control system (205) is configured to select (308) at least one of said first and second total output power levels on the basis of executing a drainage system optimization algorithm that optimizes at least one of: amount of electric energy obtainable from hydroelectric power plants within said drainage basin; total obtainable price of electric energy produced by hydroelectric power plants within said drainage basin; a total efficiency of the hydroelectric power generators; minimal need of mechanical movements of gates; reactions to icing and other causes of screen losses; distribution in time of produced electric energy,
- said control system (205) is configured to, after the total output power of said plurality of hydroelectric power generators (106) has reached (312) said second total output power level at a first moment of time, make said total output power of said plurality of hydroelectric power generators continue changing (313) in the same direction until a second, later moment of time,
- said control system is configured to return (314) said total output power of said plurality of hydroelectric power generators to said second total output power level at a third, even later moment of time, and
- said control system is configured to, between said first and third moments of time, recharge said electric energy storage if it was discharging before said first moment of time, or discharging said electric energy storage if it was charging before said first moment of time.

9. An arrangement according to claim 8, wherein the control system (205) is configured to dynamically control the power at which electric energy flows between said electric energy storage (201) and said electricity grid (110) to correspond to a remaining difference between a momentary output power of said plurality of hydroelectric power generators and said second total output power level.

10. An arrangement according to claim 8, wherein said control system (205) is configured to determine and execute a sequence of changes in generator-specific output powers of at least two of said plurality of hydroelectric power generators (106) in order to execute said change in total output power from said first total output power level to said second total output power level, wherein said determining is made on the basis of executing said drainage system optimization algorithm.

## Patentansprüche

1. Verfahren zur Verwendung hydro-elektrischer Leistung als einer Leistungsreserve eines Elektrizitätsnetzes (110), umfassend:
- Laufenlassen einer Vielzahl von hydro-elektrischen Stromgeneratoren (106), jeden auf einem entsprechenden Ausgangsleistungspegel, um elektrische Energie bei einer Gesamt-Ausgangsleistung an das Elektrizitätsnetz (110) zu liefern,
- Überwachen (204) einer Wechselstromfrequenz des Elektrizitätsnetzes (110) zum Detektieren von Abweichungen (302, 304) von einem Standard-Frequenzbereich,
- als Reaktion auf das Detektieren einer Abweichung (302, 304) von dem Standard-Frequenzbereich, elektrische Energie dazu zu bringen (303, 305), zwischen einem elektrischen Energiespeicher (201) und dem Elektrizitätsnetz (110) zu fließen,
- Initiieren einer Veränderung (310) in der Gesamt-Ausgangsleistung der Vielzahl von hydro-elektrischen Stromgeneratoren von einem ersten Gesamt-Ausgangsleistungspegel zu einem zweiten Gesamt-Ausgangsleistungspegel, und
- Fortsetzen (311), elektrische Energie dazu zu bringen, zwischen dem elektrischen Energiespeicher (201) und dem Elektrizitätsnetz (110) für die Zeitdauer zu fließen , die es erfordert, damit die Gesamt-Ausgangsleistung der Vielzahl von hydro-elektrischen Stromgeneratoren den zweiten Gesamt-Ausgangsleistungspegel erreicht (312);
**dadurch gekennzeichnet, dass**
- die Vielzahl von hydro-elektrischen Stromgeneratoren (106) ihren Betriebsstrom aus Wasserflüssen eines gemeinsamen Wassereinzugsgebiets ziehen, während sie an unterschiedlichen Teilen desselben Wassereinzugsgebiets lokalisiert sind,
- zumindest einer der ersten und zweiten Gesamt-Ausgangsleistungspegel auf Basis des Ausführens eines Drainagesystem-Optimierungs-Algorithmus ausgewählt wird (308), der zumindest eines optimiert von: Menge an elektrischer Energie, die aus hydro-elektrischen Kraftwerken innerhalb des Wassereinzugsgebiets erhaltbar ist; ein erhaltbarer Gesamtpreis von elektrischer Energie, welcher durch hydro-elektrische Kraftwerke innerhalb des Wassereinzugsgebiets erzeugt wird; einer Gesamt-Effizienz der hydro-elektrischen Stromgeneratoren; einer Minimalanforderung mechanischer Bewegungen von Schleusen; Reaktionen auf Vereisung und andere Ursachen von Schirmverlusten; Zeitverteilung von erzeugter elektrischer Energie,
- nachdem die Gesamt-Ausgangsleistung der Vielzahl von hydro-elektrischen Stromgeneratoren (106) den zweiten Gesamt-Ausgangsleistungspegel in einem ersten Zeitmoment erreicht hat (312), das Verfahren umfasst, die Gesamt-Ausgangsleistung der Vielzahl von hydro-elektrischen Stromgeneratoren dazu zu bringen, die Veränderung in derselben Richtung bis zu einem zweiten späteren Zeitpunkt fortzusetzen (313),
- das Verfahren das Rückführen (314) der Gesamt-Ausgangsleistung der Vielzahl von hydro-elektrischen Stromgeneratoren zu dem zweiten Gesamt-Ausgangsleistungspegel zu einem dritten, noch späteren Zeitpunkt umfasst, und
- zwischen den ersten und dritten Zeitpunkten, das Verfahren das Wiederaufladen des elektrischen Energiespeichers, falls er vor dem ersten Zeitpunkt entladen wurde, oder Entladen des elektrischen Energiespeichers, falls er vor dem ersten Zeitpunkt lud, umfasst.

2. Verfahren gemäß Anspruch 1, umfassend:
- dynamisches Steuern (311) der Leistung, mit welcher elektrische Energie zwischen dem elektrischen Energiespeicher (201) und dem Elektrizitätsnetz (110) fließt, um einer verbleibenden Differenz zwischen einer Momentan-Ausgangsleistung der Vielzahl von hydro-elektrischen Stromgeneratoren und dem zweiten Gesamt-Ausgangsleistungspegel zu entsprechen.

3. Verfahren gemäß Anspruch 1 oder 2, wobei das Detektieren einer Abweichung (302, 304) das Detektieren einer aufgetretenen Abweichung umfasst, in welcher eine gemessene Wechselstromfrequenz des Elektrizitätsnetzes (110) außerhalb des Standard-Frequenzbereichs liegt.

4. Verfahren gemäß einem der vorstehenden Ansprüche, wobei das Detektieren einer Abweichung (302, 304) das Detektieren einer imminenten Abweichung umfasst, in welcher eine gemessenen Wechselstromfrequenz des Elektrizitätsnetzes (110) einen Trend zeigt, der, falls fortgesetzt, dazu führt, dass die gemessene Wechselstromfrequenz des Elektrizitätsnetzes (110) aus dem Standard-Frequenzbereich hinaus geht.

5. Verfahren gemäß Anspruch 1, wobei die Änderung bei der Gesamt-Ausgangsleistung der Vielzahl von hydro-elektrischen Stromgeneratoren (106) vom ersten Gesamt-Ausgangsstrompegel zum zweiten Gesamt-Ausgangsstrompegel durch eine Abfolge von Veränderungen bei generatorspezifischen Ausgangsleistungen von zumindest zwei der Vielzahl von hydro-elektrischen Stromgeneratoren vorgenommen wird, wobei die Änderungssequenz bestimmt wird auf Basis der Ausführung des Drainage-Systemoptimierungs-Algorithmus.

6. Verfahren gemäß einem der vorstehenden Ansprüche, umfassend:
- nachdem die Abweichung (302, 304) von dem Standard-Frequenzbereich detektiert worden ist, Fortsetzen der Überwachung der Wechselstromfrequenz des Elektrizitätsnetzes, um zu detektieren, ob die Abweichung von der Standardfrequenz anhält,
- Initiierung der Änderung (310) in der Gesamt-Ausgangsleistung der Vielzahl von hydro-elektrischen Stromgeneratoren von einem ersten Gesamt-Ausgangsleistungspegel zu einem zweiten Gesamt-Ausgangsleistungspegel nur, falls die Abweichung vom Standard-Frequenzbereich als anhaltend gefunden wird (306) .

7. Verfahren gemäß Anspruch 6, umfassend:
- falls die Abweichung von dem Standard-Frequenzbereich als nicht anhaltend gefunden wird (307), Ausführen eines elektrischen Energiespeicher-Wiederherstellprozesses, der reziproke Veränderungen (313, 314) in der Gesamt-Ausgangsleistung und der Leistung, mit welcher elektrische Energie zwischen dem elektrischen Energiespeicher (201) und dem Elektrizitätsnetz (110) fließt, umfasst, bis der Ziel-Ladepegel des elektrischen Energiespeichers (201) erreicht worden ist (315).

8. Anordnung zur Verwendung hydro-elektrischen Stroms als Stromreserve eines Elektrizitätsnetzes (110), umfassend:
- einen elektrischen Energiespeicher (201),
- eine steuerbare Kupplung (202) zwischen dem elektrischen Energiespeicher (201) und dem Elektrizitätsnetz (110),
- eine Vielzahl von hydro-elektrischen Stromgeneratoren (106), die gekoppelt sind, um elektrische Energie an das Elektrizitätsnetz (110) zu liefern,
- einen Frequenz-Monitor (204), der konfiguriert ist, eine Wechselstromfrequenz des Elektrizitätsnetzes (110) zu überwachen, und
- ein Steuersystem (205), das gekoppelt ist, Detektionsinformation aus dem Frequenzmonitor (204) zu empfangen, und konfiguriert (203), die steuerbare Kupplung (202) und einen Gesamt-Ausgangsstrompegel der Vielzahl von hydro-elektrischen Stromgeneratoren (106) zu steuern;
wobei das Steuersystem (205) konfiguriert ist, auf Detektionsinformation zu antworten, die für eine Abweichung (302, 304) der Wechselstromfrequenz von einem Standard-Frequenzbereich indikativ ist, durch:
- elektrische Energie dazu zu bringen (303, 305) zwischen dem elektrischen Energiespeicher (201) und dem Elektrizitätsnetz (110) zu fließen,
- Initiieren einer Änderung (310) in der Gesamt-Ausgangsleistung der Vielzahl von hydro-elektrischen Stromgeneratoren von einem ersten Gesamt-Ausgangsleistungspegel zu einem zweiten Gesamt-Ausgangsleistungspegel, und
- Fortsetzen (311), elektrische Energie dazu zu bringen, zwischen dem elektrischen Energiespeicher (201) und dem Elektrizitätsnetz (110) für die Zeitdauer zu fließen, die es erfordert, damit die Gesamt-Ausgangsleistung der Vielzahl von hydro-elektrischen Stromgeneratoren den zweiten Gesamt-Ausgangsleistungspegel erreicht (312);
**dadurch gekennzeichnet, dass,**
- die Vielzahl von hydro-elektrischen Stromgeneratoren (106) ihre Betriebsleistung aus Wasserflüssen eines gemeinsamen Wassereinzugsgebiets zieht, während sie an unterschiedlichen Teilen der Wassereinzugsgebiets lokalisiert sind,
- das Steuersystem (205) konfiguriert ist, zumindest einen besagter erster und zweiter Ausgangsleistungspegel auf Basis des Ausführens eines Drainagesystem-Optimierungs-Algorithmus auszuwählen (308), welcher optimiert zumindest eines von: Menge an elektrischer Energie, die aus hydro-elektrischen Kraftwerken innerhalb des Wassereinzugsgebiets erhaltbar ist; ein erhaltbarer Gesamtpreis von elektrischer Energie, welcher durch hydro-elektrische Kraftwerke innerhalb des Wassereinzugsgebiets erzeugt wird; einer Gesamt-Effizienz der hydro-elektrischen Stromgeneratoren; einer Minimalanforderung mechanischer Bewegungen von Schleusen; Reaktionen auf Vereisung und andere Ursachen von Schirmverlusten; Zeitverteilung von erzeugter elektrischer Energie,
- wobei das Steuersystem (205) konfiguriert ist, nachdem die Gesamtausgangsleistung der Vielzahl von hydro-elektrischen Stromgeneratoren (106) den zweiten Gesamt-Ausgangsleistungspegel in einem ersten Zeitmoment erreicht hat (312), die Gesamtausgangsleistung der Vielzahl von hydro-elektrischen Stromgeneratoren dazu zu bringen, sich weiterhin in derselben Richtung bis zu einem zweiten, späteren Zeitpunkt zu ändern (313),
- das Steuersystem konfiguriert ist, die Gesamtausgangsleistung der Vielzahl von hydro-elektrischen Stromgeneratoren auf den zweiten Gesamtausgangsleistungspegel zu einem dritten, noch späteren Zeitpunkt zurückzuführen (314), und
- das Steuersystem konfiguriert ist, zwischen den ersten und dritten Zeitpunkten den elektrischen Energiespeicher wieder zu laden, falls er vor dem ersten Zeitpunkt entladen wurde, oder den elektrischen Energiespeicher zu entladen, falls er vor dem ersten Zeitpunkt lud.

9. Anordnung gemäß Anspruch 8, wobei das Steuersystem (205) konfiguriert ist, die Leistung, mit welcher elektrische Energie zwischen dem elektrischen Energiespeicher (201) und dem Elektrizitätsnetz (110) fließt, so zu steuern, dass sie einer verbleibenden Differenz zwischen einer Momentan-Ausgangsleistung der Vielzahl von hydro-elektrischen Stromgeneratoren und dem zweiten Gesamtausgangsleistungspegel entspricht.

10. Anordnung gemäß Anspruch 8, wobei das Steuersystem (205) konfiguriert ist, eine Änderungssequenz in generatorspezifischen Ausgangsleistungen von zumindest zwei der Vielzahl von hydro-elektrischen Stromgeneratoren (106) zu bestimmen und auszuführen, um die Änderung bei der Gesamtausgangsleistung von dem ersten Gesamtausgangsleistungspegel zum zweiten Gesamtausgangsleistungspegel auszuführen, wobei das Bestimmen auf Basis des Ausführens des Drainagesystem-Optimierungs-Algorithmus vorgenommen wird.

## Revendications

1. Procédé d'utilisation de la puissance hydroélectrique comme réserve de puissance d'un réseau électrique (110), comprenant le fait de :
- faire fonctionner une pluralité de générateurs de puissance hydroélectrique (106), chacun à un niveau de puissance de sortie respectif, pour fournir de l'énergie électrique à une puissance de sortie totale audit réseau électrique (110),
- surveiller (204) une fréquence alternative dudit réseau électrique (110) pour détecter des écarts (302, 304) par rapport à une plage de fréquences par défaut,
- en réponse à la détection d'un écart (302, 304) par rapport à ladite plage de fréquences par défaut, établir une circulation d'énergie électrique (303, 305) entre un dispositif de stockage d'énergie électrique (201) et ledit réseau électrique (110),
- initier un changement (310) de ladite puissance de sortie totale de ladite pluralité de générateurs de puissance hydroélectrique d'un premier niveau de puissance de sortie totale à un deuxième niveau de puissance de sortie totale, et
- continuer (311) à établir une circulation d'énergie électrique entre ledit dispositif de stockage d'énergie électrique (201) et ledit réseau électrique (110) pendant la durée nécessaire pour que la puissance de sortie totale de ladite pluralité de générateurs de puissance hydroélectrique atteigne (312) ledit deuxième niveau de puissance de sortie totale ;
**caractérisé en ce que** :
- ladite pluralité de générateurs de puissance hydroélectrique (106) tirent leur puissance de fonctionnement des écoulements d'eau d'un bassin versant commun tout en étant situés à différentes parties dudit bassin versant,
- au moins l'un desdits premier et deuxième niveaux de puissance de sortie totale est sélectionné (308) sur la base de l'exécution d'un algorithme d'optimisation de système de drainage qui optimise au moins l'un(e) parmi : la quantité d'énergie électrique pouvant être obtenue à partir de centrales hydroélectriques à l'intérieur dudit bassin versant ; un prix total pouvant être obtenu de l'énergie électrique produite par des centrales hydroélectriques à l'intérieur dudit bassin versant ; un rendement total des générateurs de puissance hydroélectrique ; le besoin minimal de mouvements mécaniques des portes ; les réactions au givrage et autres causes de pertes de tamis ; la répartition dans le temps de l'énergie électrique produite,
- après que la puissance de sortie totale de ladite pluralité de générateurs de puissance hydroélectrique (106) a atteint (312) ledit deuxième niveau de puissance de sortie totale à un premier instant, le procédé consiste à faire en sorte que ladite puissance de sortie totale de ladite pluralité de générateurs de puissance hydroélectrique continue à changer (313) dans la même direction jusqu'à un deuxième instant ultérieur,
- le procédé comprend le fait de ramener (314) ladite puissance de sortie totale de ladite pluralité de générateurs de puissance hydroélectrique audit deuxième niveau de puissance de sortie totale à un troisième instant encore plus tard, et
- entre lesdits premier et troisième instants, le procédé comprend le fait de recharger ledit dispositif de stockage d'énergie électrique s'il se déchargeait avant ledit premier instant, ou de décharger ledit dispositif de stockage d'énergie électrique s'il se chargeait avant ledit premier instant.

2. Procédé selon la revendication 1, comprenant le fait de :
- commander dynamiquement (311) la puissance à laquelle l'énergie électrique circule entre ledit dispositif de stockage d'énergie électrique (201) et ledit réseau électrique (110) pour correspondre à une différence restante entre une puissance de sortie momentanée de ladite pluralité de générateurs de puissance hydroélectrique et ledit deuxième niveau de puissance de sortie totale.

3. Procédé selon la revendication 1 ou 2, dans lequel ladite détection d'un écart (302, 304) comprend la détection d'un écart survenu, dans lequel une fréquence alternative mesurée dudit réseau électrique (110) est en dehors de ladite plage de fréquences par défaut.

4. Procédé selon l'une des revendications précédentes, dans lequel ladite détection d'un écart (302, 304) comprend la détection d'un écart imminent, dans lequel une fréquence alternative mesurée dudit réseau électrique (110) présente une tendance qui, si elle se poursuit, conduit ladite fréquence alternative mesurée dudit réseau électrique (110) à sortir de ladite plage de fréquences par défaut.

5. Procédé selon la revendication 1, dans lequel ledit changement de ladite puissance de sortie totale de ladite pluralité de générateurs de puissance hydroélectrique (106) dudit premier niveau de puissance de sortie totale audit deuxième niveau de puissance de sortie totale est effectué par une séquence de changements de puissances de sortie spécifiques au générateur d'au moins deux de ladite pluralité de générateurs de puissance hydroélectrique, dans lequel ladite séquence de changements est déterminée sur la base de l'exécution dudit algorithme d'optimisation de système de drainage.

6. Procédé selon l'une des revendications précédentes, comprenant le fait de :
- après que ledit écart (302, 304) par rapport à ladite plage de fréquences par défaut a été détecté, continuer à surveiller ladite fréquence alternative dudit réseau électrique pour détecter si ledit écart par rapport à ladite fréquence par défaut persiste,
- initier ledit changement (310) de ladite puissance de sortie totale de ladite pluralité de générateurs de puissance hydroélectrique d'un premier niveau de puissance de sortie totale à un deuxième niveau de puissance de sortie totale uniquement s'il s'avère que ledit écart par rapport à ladite plage de fréquences par défaut persiste (306).

7. Procédé selon la revendication 6, comprenant le fait de :
- s'il s'avère que ledit écart par rapport à ladite plage de fréquences par défaut ne persiste pas (307), exécuter un processus de restauration de dispositif de stockage d'énergie électrique qui comprend des changements réciproques (313, 314) de ladite puissance de sortie totale et de la puissance à laquelle l'énergie électrique circule entre ledit dispositif de stockage d'énergie électrique (201) et ledit réseau électrique (110) jusqu'à ce qu'un niveau de charge cible dudit dispositif de stockage d'énergie électrique (201) ait été atteint (315).

8. Agencement d'utilisation de la puissance hydroélectrique comme réserve de puissance d'un réseau électrique (110), comprenant :
- un dispositif de stockage d'énergie électrique (201),
- un couplage pouvant être commandé (202) entre ledit dispositif de stockage d'énergie électrique (201) et ledit réseau électrique (110),
- une pluralité de générateurs de puissance hydroélectrique (106) couplés pour fournir de l'énergie électrique audit réseau électrique (110),
- un moniteur de fréquence (204) configuré pour surveiller une fréquence alternative dudit réseau électrique (110), et
- un système de commande (205) couplé pour recevoir des informations de détection dudit moniteur de fréquence (204) et configuré (203) pour commander ledit couplage pouvant être commandé (202) et un niveau de puissance de sortie totale de ladite pluralité de générateurs de puissance hydroélectrique (106) ;
dans lequel ledit système de commande (205) est configuré pour répondre à des informations de détection indiquant un écart (302, 304) de ladite fréquence alternative par rapport à une plage de fréquences par défaut en :
- établissant une circulation d'énergie électrique (303, 305) entre ledit dispositif de stockage d'énergie électrique (201) et ledit réseau électrique (110),
- initiant un changement (310) de ladite puissance de sortie totale de ladite pluralité de générateurs de puissance hydroélectrique d'un premier niveau de puissance de sortie totale à un deuxième niveau de puissance de sortie totale, et
- continuant (311) à établir une circulation d'énergie électrique entre ledit dispositif de stockage d'énergie électrique (201) et ledit réseau électrique (110) pendant la durée nécessaire pour que la puissance de sortie totale de ladite pluralité de générateurs de puissance hydroélectrique atteigne (312) ledit deuxième niveau de puissance de sortie totale ;
**caractérisé en ce que** :
- ladite pluralité de générateurs de puissance hydroélectrique (106) tirent leur puissance de fonctionnement des écoulements d'eau d'un bassin versant commun tout en étant situés à différentes parties dudit bassin versant,
- ledit système de commande (205) est configuré pour sélectionner (308) au moins l'un desdits premier et deuxième niveaux de puissance de sortie totale sur la base de l'exécution d'un algorithme d'optimisation de système de drainage qui optimise au moins l'un(e) parmi : la quantité d'énergie électrique pouvant être obtenue à partir de centrales hydroélectriques à l'intérieur dudit bassin de drainage ; un prix total pouvant être obtenu de l'énergie électrique produite par des centrales hydroélectriques à l'intérieur dudit bassin versant ; un rendement total des générateurs de puissance hydroélectrique ; le besoin minimal de mouvements mécaniques des portes ; les réactions au givrage et autres causes de pertes de tamis ; la répartition dans le temps de l'énergie électrique produite,
- ledit système de commande (205) est configuré pour, après que la puissance de sortie totale de ladite pluralité de générateurs de puissance hydroélectrique (106) a atteint (312) ledit deuxième niveau de puissance de sortie totale à un premier instant, faire en sorte que ladite sortie de puissance totale de ladite pluralité de générateurs de puissance hydroélectrique continue à changer (313) dans la même direction jusqu'à un deuxième instant ultérieur,
- ledit système de commande est configuré pour ramener (314) ladite puissance de sortie totale de ladite pluralité de générateurs de puissance hydroélectrique audit deuxième niveau de puissance de sortie totale à un troisième instant encore plus tard, et
- ledit système de commande est configuré pour, entre lesdits premier et troisième instants, recharger ledit dispositif de stockage d'énergie électrique s'il se déchargeait avant ledit premier instant, ou décharger ledit dispositif de stockage d'énergie électrique s'il se chargeait avant ledit premier instant.

9. Agencement selon la revendication 8, dans lequel le système de commande (205) est configuré pour commander dynamiquement la puissance à laquelle l'énergie électrique circule entre ledit dispositif de stockage d'énergie électrique (201) et ledit réseau électrique (110) pour correspondre à une différence restante entre une puissance de sortie momentanée de ladite pluralité de générateurs de puissance hydroélectrique et ledit deuxième niveau de puissance de sortie totale.

10. Agencement selon la revendication 8, dans lequel ledit système de commande (205) est configuré pour déterminer et exécuter une séquence de changements de puissances de sortie spécifiques au générateur d'au moins deux de ladite pluralité de générateurs de puissance hydroélectrique (106) afin d'exécuter ledit changement de la puissance de sortie totale dudit premier niveau de puissance de sortie totale audit deuxième niveau de puissance de sortie totale, dans lequel ladite détermination est effectuée sur la base de l'exécution dudit algorithme d'optimisation de système de drainage.
